Europäisches Patentamt

European Patent Office

Office européen des brevets

(19)

(11) Publication number: **0 081 931**
**A1**

(12)

# EUROPEAN PATENT APPLICATION

(21) Application number: 82306242.7

(22) Date of filing: 23.11.82

(51) Int. Cl.³: **F 16 L 47/02, B 29 C 27/02**

(30) Priority: 18.12.81 US 332268

(71) Applicant: Gulf Oil Corporation, P. O. Box 1166, Pittsburgh Pennsylvania 15230 (US)

(43) Date of publication of application: 22.06.83
Bulletin 83/25

(72) Inventor: Gilbert, Ronald E., 20311 Triton Court, Katy Texas 77450 (US)
Inventor: Kemp, Eric E., 5414 Boyce Springs, Houston Texas 77066 (US)

(84) Designated Contracting States: DE FR GB IT SE

(74) Representative: Huskisson, Frank Mackie et al, Fitzpatricks 48 St. Vincent Street, Glasgow, G2 5TT Scotland (GB)

(54) Method and apparatus for sealing sections of large diameter thermoplastic pipe.

(57) A method is disclosed for sealing sections of large diameter thermoplastic pipe. After pressing sections of pipe together to form a nonliquid-tight joint, a hot gas is directed against the annulus of the joint to heat the surfaces to at least the resin's softening point. Droplets of melted resin then are blown into the heated annulus and permitted to cool to seal the joint.

EP 0 081 931 A1

COMPLETE DOCUMENT

- 2 -

## BACKGROUND OF THE INVENTION

Pipe fabricated from thermoplastic resins such as polyethylene and polyvinyl chloride is used in large volume. Such pipe is used, however, largely if not almost exclusively in small diameters. The art has recognized that large diameter thermoplastic pipe, i.e., pipe having internal diameters of 36 inches or larger, could be used for drainpipe and other applications where large diameter concrete and clay pipe are presently used. One of the factors that has limited the market acceptance of large diameter thermoplastic pipe is the difficulty of sealing sections of such pipe together to form liquid-tight joints. Accordingly, there is a need in the art for improved methods of joining sections of such large diameter thermoplastic pipe together to form liquid-tight joints.

BRIEF DESCRIPTION OF THE DRAWINGS

Fig. 1 is a sectional view of one section of large diameter pipe having a bell-shape female joint on one end and a spigot male joint on the other end.

Fig. 2 is a sectional view taken through line 2-2 of Fig. 1 illustrating the manner in which such pipe may be deformed out of round by conditions to which it has been subjected prior to installation.

Fig. 3 is a sectional view of a spigot male joint inserted in a bell female joint before sealing.

Fig. 4 is a sectional view showing the manner in which the zone defined by faces of the spigot and bell joints is sealed with resin.

Fig. 5 is a view similar to Fig. 4 showing a second layer of resin which has been applied to the sealed joint shown in Fig. 4.

Fig. 6 illustrates the manner in which a worker can seal together two sections of large pipe, while standing within the pipe.

Fig. 7 is a view, partially in section, showing a flame gun which can be employed in the practice of the invention.

Fig. 8 is a view similar to Fig. 7 showing the manner in which finely divided thermoplastic resin particles are blown through the flame of the gun to form small droplets of melted resin.

Fig. 9 is a side view of an apparatus that can be employed in the practice of the invention.

- 4 -

Fig. 10 is an end view of the apparatus of Fig. 9 as viewed through line 10-10 of Fig. 9.

Fig. 11 illustrates in greater detail the drive unit of the apparatus illustrated in Figs. 9 and 10.

Fig. 12 is an exploded view of the sprocket and flame gun carrier plate.

Fig. 13 is a perspective view of a manhole prepared from two sections of large diameter thermoplastic pipe.

Fig. 14 is a top view of the manhole of Fig. 13 viewed along line 14-14.

Fig. 15 is an enlarged view of a section of the manhole showing the manner in which the two sections of the large diameter pipe are sealed together to form liquid-tight joints.

## SUMMARY OF THE INVENTION

The present invention provides a method for preparing liquid-tight seals between sections of large diameter thermoplastic pipe. The method includes the steps of:

(a) Pressing two sections of pipe together to form a nonliquid-tight joint between said two pipe sections,

(b) Directing a stream of hot gas against a section of the contiguous faces of the two pipe sections which form the joint prepared in step (a) so as to heat said contiguous faces to at least their softening point,

(c) Spraying a stream of finely divided thermoplastic resin particles through a hot gas and into the zone defined by the contiguous faces heated in step (b) so as to melt said resin particles and seal said zone with melted resin,

(d) Terminating the spray of melted resin into said zone and permitting the melted resin to solidify, and

(e) Repeating steps (b), (c), and (d) until the entire joint formed in step (a) is filled with resin.

The pipe sections employed will have a minimum internal diameter of at least 24 inches and a wall thickness of at least about 1/8 inch. The resin particles employed will be a resin which readily forms a fusion bond with the resin from which the pipe sections are fabricated.

0081931

- 6 -

DETAILED DESCRIPTION OF THE INVENTION

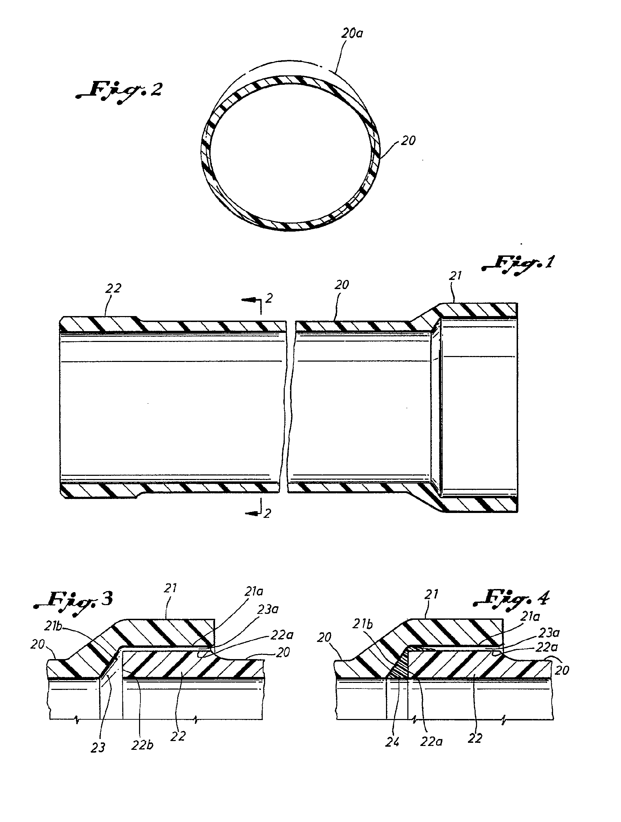

Fig. 1 shows a sectional view of a large diameter thermoplastic pipe section of the type that can be joined by the method of the present invention. The pipe section will have a minimum length of 10 feet, a minimum internal diameter of 24 inches, and a minimum wall thickness of about 1/8 inch. More typically, the pipe section will have a length of approximately 20 feet and can have an internal diameter at least as large as 144 inches. The main pipe section 20 has an integral female bell joint section 21 on one end and a male spigot joint section 22 on the other end.

Sections of large diameter thermoplastic pipe of the type employed in the practice of the present invention typically will weigh at least 600 pounds. When such pipe sections are stored in stacked relationship, they sometimes can be distorted so that a cross section thereof is not completely round. This phenomenon is illustrated in Fig. 2 in which section 20 of the pipe is shown to be distorted out-of-round so as to have a slight egg-like cross-section. The dashed line 20a indicates the configuration that the pipe would have if it were truly round. The amount of distortion shown in Fig. 2 is exaggerated for purposes of illustration.

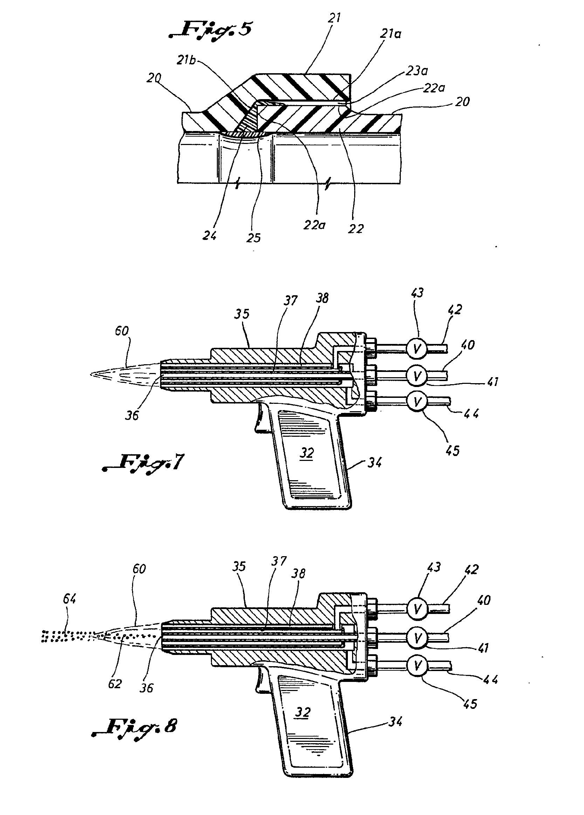

Fig. 3 illustrates the manner in which two sections of pipe of the type shown in Fig. 1 are fitted together. The female bell joint 21 of one pipe section fits around and encompasses the male spigot joint 22 of an adjoining pipe section. Ideally, the fit between the two joints should be sufficiently tight so that face 22a of the spigot joint is in touching relationship with face 21a of the bell joint around the entire annulus of the joint. By reason of the possible distortion of the pipe out of its ideal round configuration, as illustrated in Fig. 2, a gap must be provided between faces 21a and 22a. This is one of the factors which gives rise to the difficulty in providing liquid-tight seals between sections of large diameter thermoplastic pipe. The face 21b of the bell joint and face 22b of the spigot joint 22 define an annulus 23. A second and connecting annulus 23a is defined by faces 21a and 22a.

The assembly shown in Fig. 3 could be sealed to form a liquid-tight joint by sealing either annulus 23 or 23a. By reason of their weight, the pipe sections must be placed in their use site before being sealed. In most applications, the pipe will be partially buried before being sealed. This necessitates sealing the pipe from its interior. Accordingly, sections of the annulus 23 will be heated with a hot gas to at least soften faces 21b and 22b. A stream of molten resin droplets then will be sprayed into the heated annulus and allowed to solidify to seal the joint.

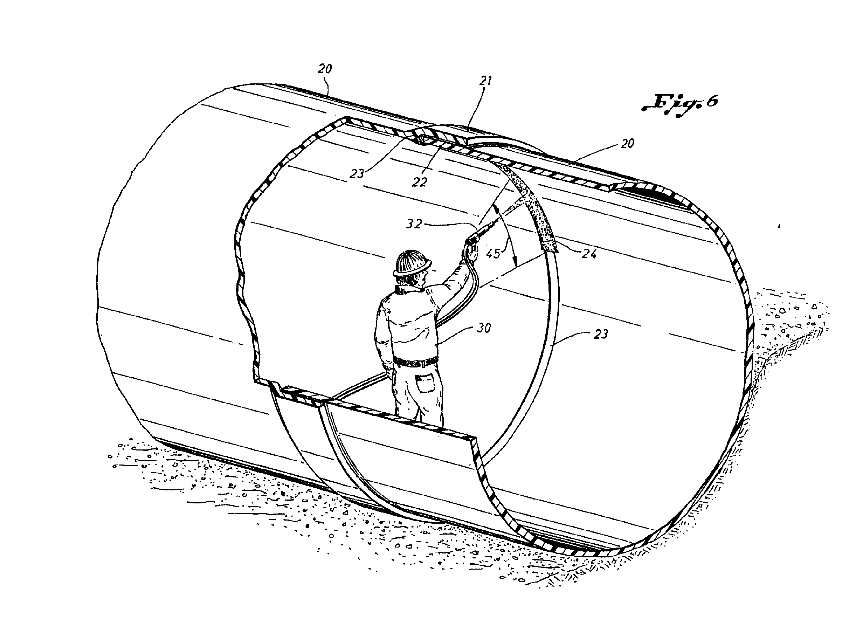

One means for heating the sections is illustrated in Fig. 6. A worker 30, standing within the pipe, directs the flame from a flame spray gun 32 along an arcuate section of the annulus 23. After the arcuate section of the annulus 23 is heated to at least the softening point of the walls 21b and 22b, small droplets of melted polymer are sprayed into the heated section of the annulus 23 by means of the flame spray gun 32. At the completion of these steps, and after permitting the melted polymer to cool, the arcuate section 23 is filled with solidified polymer 24 which seals the joint. The above steps are successively repeated until the worker 30 has completely filled the annulus 23 with polymer 24. After the annulus 23 has been completely filled with polymer 24 as illustrated in Fig. 4, it is preferred practice to heat the sealed area with hot gas and spray molten polymer over the heated area to form a second layer of polymer 25. Preferably, layer 25 should be extended beyond the edges of annulus 23 as illustrated in Fig. 5.

Fig. 7 illustrates a flame spray gun of the type that can be employed in the practice of the present invention. The gun 32 includes a handle 34 having the general shape of a pistol grip. The main body section 35 of the apparatus includes a central chamber 36, an annular chamber 37, and a second annular chamber 38. Each of the chambers is supplied by external supply lines 40, 42, and 44; each of which is provided with flow control valves 41, 43, or 45. In operation, a combustible gas such as propane is fed to chamber 37 from an external source via line 42, and an oxidizing gas, either air or oxygen, is fed to chamber 38 from an external source via line 44. After ignition, the flow of the two gases will be controlled to provide a stable, conically shaped flame 60. When the flame spray gun is employed to fill annulus 23 with melted polymer 24, the flame spray gun 32 is operated in the mode illustrated in Fig. 8. In this mode, the combustible gas/oxidizing gas mixture is burned to form the flame 60 as previously described. A stream of fine thermoplastic resin particles is blown into and through central chamber 36 via line 40 by a suitable carrier gas such as air or nitrogen. Upon entering flame 60, the resin particles 62 are in the solid state. This is noted in Fig. 8 by showing the resin particles as small open circles. In passing through the flame, the resin particles are heated sufficiently to melt them and form molten droplets 64. This change of state is shown by illustrating the melted droplets of resins as small filled circles.

The hot gases from the flame will be directed against the faces of the joint to be sealed. In the view illustrated in Fig. 3, the hot gases enter annulus 23 and a portion of the hot gases also flows into annulus 23a. When the melted resin droplets 64 shown in Fig. 8 are blown into annulus 23, a portion of the resin droplets also flow into an annulus 23a and seal a portion thereof as shown in Fig. 4. Depending upon the proximity of the tip of flame 60 to annulus 23, it sometimes is observed that some melted resin droplets 64 flow completely through annulus 23a and solidify on the exterior surface of pipe section 20.

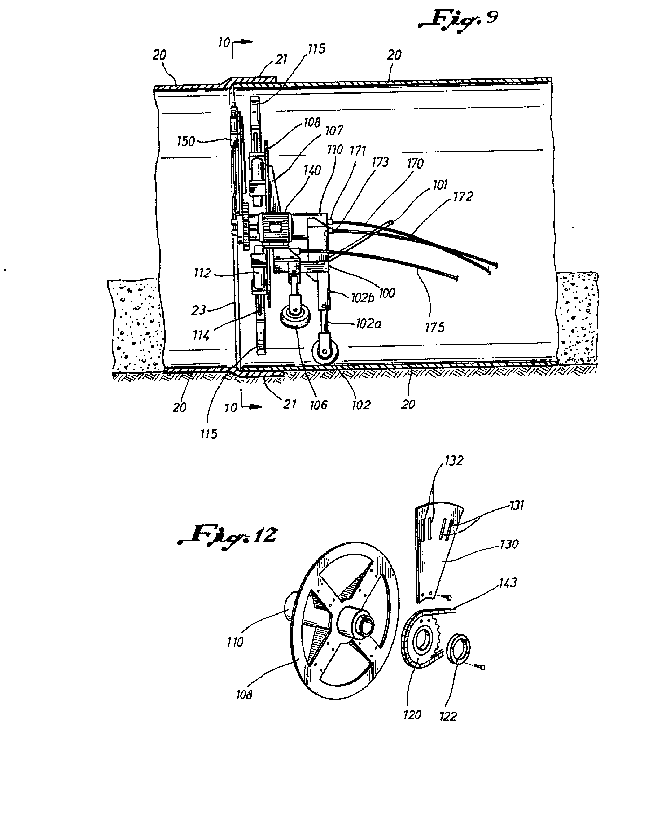

Figs. 9 and 10 show a form of apparatus that can be employed to carry out the method of the invention in a semiautomatic manner. A main frame 100 is supported and

0081931

positioned by three wheels 102, 104, and 106. The wheels are atached to telescoping extension legs 102a, 104a, and 106a which can be moved in and out of chambers 102b, 104b, and 106b by means not shown. The wheels are adjusted so that tubular main support member 110 (best seen in Fig. 11) is centrally positioned within the pipe section. The wheels of course also serve to move the apparatus along the length of the pipe sections. A handle 101 is provided to assist in moving the apparatus.

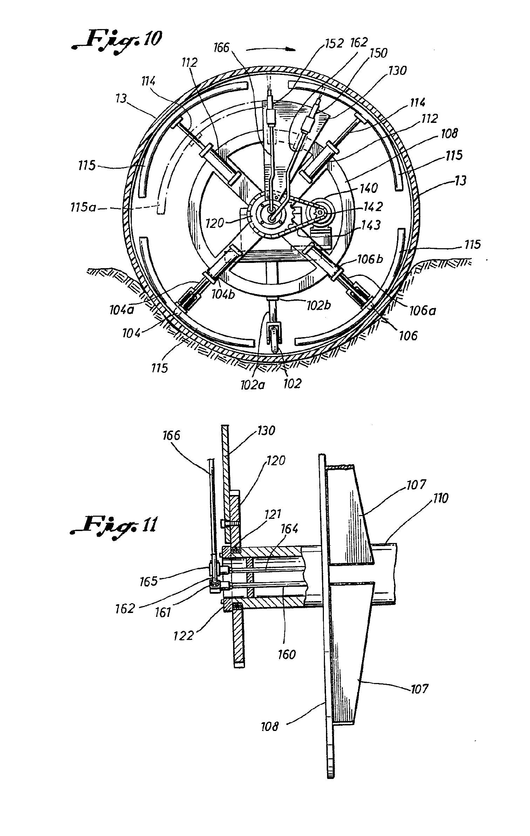

A support brace 107 is rigidly positioned on main frame 100. As best seen in Fig. 11, the tubular main support member 110 is mounted on and supported by brace 107. A mounting ring 108 is supported on the main support member as illustrated in Figs. 11 and 12. The mounting ring 108 has a series of four hydraulic cylinders 112 mounted thereon; only two of which are seen in Fig. 10. Piston arms 114 extend from cylinders 112 and press arcuate shaped feet 115 against the interior wall of the pipe to prevent the apparatus from moving while the pipe joint is being sealed. One foot 115 also is shown in a partially retracted position as 115a. By reason of the ability to control the extended length of legs 102a, 104a, and 106a and the extended length of piston arms 114, the apparatus can be employed to seal sections of pipe having a range of internal diameters.

A sprocket wheel 120 is seated by a flange 122 in a recess cut into support member 110. The sprocket wheel rides on a bearing 121. A flame spray gun carrier plate 130

G081931

- 11 -

is attached to the sprocket wheel 120 by suitable fasteners. A drive motor 140 having a sprocket wheel 142 attached to its shaft is mounted on the main frame 100. A chain drive 143 running over sprocket wheels 120 and 142 rotates the spray gun carrier plate 130. Two flame spray guns 150 and 152 are mounted on carrier plate 130 through openings 131 and 132. The carrier plate is rotated in the direction shown by the arrow in Fig. 10.

A combustible gas is fed through lines 160 and 162 to supply the leading flame spray gun 150. A suitable rotating swivel 161 is provided to accommodate the rotation of carrier plate 130. Air or oxygen is supplied by suitable lines and a swivel not shown. In a like manner, a combustible gas, air or oxygen, and a stream of finely divided resin particles are fed to the trailing flame spray gun by suitable lines and swivels; one operative assembly being shown as 164, 165, and 166. The combustible gas, the air or oxygen, and the finely divided resin particles are supplied from external sources by suitable lines; two of which are shown as 170 and 172 which are attached to the apparatus by couplings 171 and 173. An electrical line 175 supplies power to motor 140.

In operation, the apparatus is wheeled into proximity with the annulus 23 that is to be sealed. While being moved, the arcuate feet 115 will be withdrawn from their touching relationship with the interior wall of the pipe. If not previously adjusted, the wheel legs 102a, 104a, and 106a will be retracted or extended so that the main support member 110 is centrally positioned within the pipe. The flame of the leading spray gun 150 will be lit briefly to establish that the apparatus is properly positioned so that the flame is aligned with the annulus 23 that is to be sealed. ·The flame then is extinguished and arms 114 are extended so that arcuate feet 115 press against the interior of the pipe to hold the apparatus in a fixed position during the sealing operation. The wheels 102, 104, and 106 also are locked by means not shown.

The motor 140 then is turned on so that sprocket wheel 120 is rotated. The leading flame spray gun 150 is lit and heating of annulus 23 is initiated. At the time that the trailing flame spray gun 152 is rotated under a section of the annulus that has been heated, it is lit and hot droplets of melted resin are sprayed into the heated annulus 23. As the flame spray guns 150 and 152 are rotated at a fixed speed, the melted resin cools quickly after it is sprayed into annulus 23. By visual inspection, the operator within the pipe can readily tell when the annulus is completely filled with resin and sealed. If minor voids are noted in the seal, they can be sealed with a hand held flame spray gun as described earlier herein.

After the joint is sealed, the arcuate feet are withdrawn from contact with the interior pipe surface by retracting arms 114 into cylinders 112. The apparatus then can be moved to seal the next joint in the pipe train.

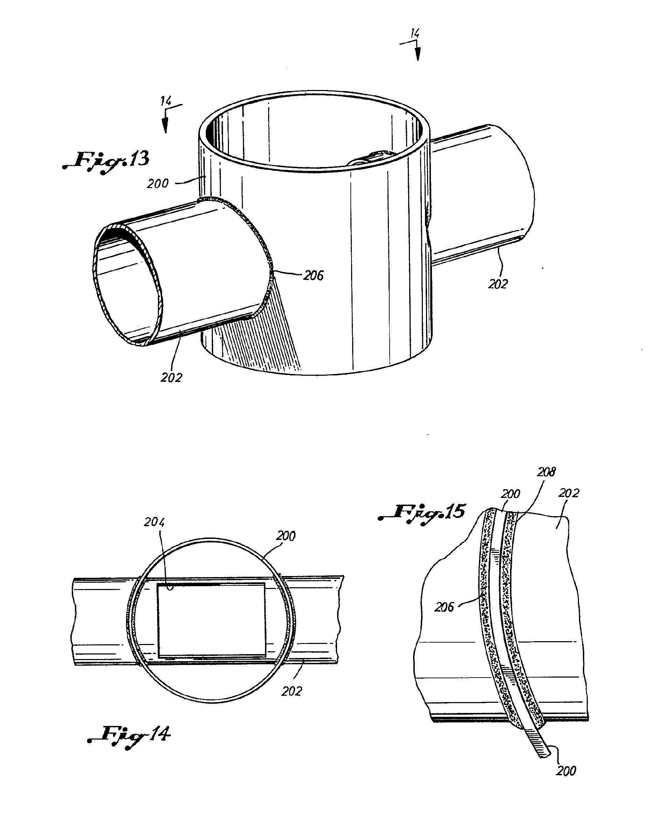

The method of the invention can be employed to manufacture manholes from two sections of large diameter pipe; one pipe section having a larger diameter than the other. Referring to Fig. 13, the smaller diameter pipe section 202 is fitted horizontally into a section of larger diameter pipe 200. Pipe section 202 is mounted in pipe section 200 through two carefully positioned and sized cuts made in pipe 200 so that the pipe section 202 fits snugly therein. The areas where the wall of pipe section 202 abuts with the cut in pipe section 200 are sealed at both the interior and exterior sections of the wall of pipe section 200. A bead or weld line 206 is formed on the exterior surface and a bead or weld line 208 is formed on the interior surface; the weld lines being best seen in Fig. 15. An opening 204 is cut in the top section of pipe 202 to receive fluids entering pipe section 200. The bottom section of pipe section 200 is appropriately sealed by means not shown.

The method of the invention can be employed to seal joints of pipe fabricated from a wide variety of thermoplastic resin. Best results are obtained when the pipe is fabricated from a resin having a relatively broad softening point or melting point range and a high melt viscosity at the softening point. High molecular weight, high density polyethylene is the resin of choice. The finely divided resin particles should be of a resin type that readily forms a fusion bond with the resin from which the pipe sections are fabricated. Ideally the resin particles should be particles of the resin from which the pipe sections are fabricated.

Claims .

1. A method for preparing liquid-tight seals between sections of large diameter thermoplastic pipe which consists essentially of:

   (a) Pressing two sections of pipe together to form a nonliquid-tight joint between said two pipe sections,

   (b) Directing a stream of hot gas against a section of the contiguous faces of the two pipe sections which form the joint prepared in step (a) so as to heat said contiguous faces to at least their softening point,

   (c) Spraying a stream of finely divided thermoplastic resin particles through a hot gas and into the zone defined by the contiguous faces heated in step (b) so as to melt said resin particles and seal said zone with melted resin,

   (d) Terminating the spray of melted resin into said zone and permitting the melted resin to solidify, and

   (e) Repeating steps (b), (c), and (d) until the entire joint formed in step (a) is filled with resin;

   the pipe sections employed having an internal diameter of at least 24 inches and a wall thickness of at least about 1/8 inch; the resin employed in step (c) being a resin which readily forms a fusion bond with the resin from which the pipe sections are fabricated.

0081931

- 15 -

2.  A method for preparing liquid-tight seals between sections of large diameter thermoplastic pipe having complementary male and female joints on opposite ends thereof
    which consist essentially of:

    (a)  Pressing the two sections of pipe together so that
         the female joint of one section fits tightly around
         the male joint of the other section,

    (b)  Directing a stream of hot gas against an arcuate
         section of the abutting internal faces of said male
         and female joints so as to heat said abutting surfaces to at least their softening point,

    (c)  Spraying a stream of fine thermoplastic resin particles through a hot gas and into the zone defined
         by the abutting faces heated in step (b) so as to
         melt said resin particles and seal said zone with
         melted resin,

    (d)  Terminating the spray of melted resin into said zone
         and permitting the melted resin to solidify, and

    (e)  Repeating steps (b), (c), and (d) successively until
         the entire annular zone defined by the abutting
         faces of the male and female joints is filled with
         resin;

    the pipe sections employed having a length of at least
    10 feet, an internal diameter of at least 24 inches,
    and a wall thickness of at least about 1/8 inch; the
    resin employed in step (c) being a resin which readily
    forms a fusion bond with the resin from which the pipe
    sections are fabricated.

- 16 -                    0081931

3.  In a method for preparing a long, liquid-tight line of
    pipe in a prepared, below-ground-level trench from sections of large diameter thermoplastic pipe having complementary male and female joints on opposite ends thereof;
    the improvement which consists essentially of:

    (a)  Laying two sections of said pipe in said trench so
         that the female joint of one section abuts against
         the male joint of the other section,

    (b)  Pressing the two sections of pipe of (a) together
         so that the female joint of one section fits tightly
         around the male joint of the other section,

    (c)  Directing a stream of hot gas against an arcuate
         section of the abutting internal faces of said male
         and female joints so as to heat said abutting surfaces to at least their softening point,

    (d)  Spraying a stream of fine thermoplastic resin particles through a hot gas and into the zone defined
         by the abutting faces heated in step (c) so as to
         melt said resin particles and seal said zone with
         melted resin,

    (e)  Terminating the spray of melted resin into said zone
         and permitting the melted resin to solidify,

    (f)  Repeating steps (c), (d), and (e) successively until
         the entire annular zone defined by the abutting faces
         of the male and female joints is filled with resin,

    (g)  Laying additional sections of pipe into the trench
         and successively pressing joints thereof into fitting
         relationship with a free joint of the pipe line previously prepared and sealed liquid-tight, and

(h)   Repeating steps (c), (d), (e), and (f), successively to seal said added pipe sections
      to the previously prepared and sealed pipe
      line; .

the said pipe sections employed having a length
of at least 10 feet, an internal diameter of at
least 24 inches, and a wall thickness of at least
about 1/8 inch; the resin employed in step (d)
being a resin which readily forms a fusion bond
with the resin from which the pipe sections are
fabricated.

4.    A method of claim 1, 2, or 3 in which the pipe sections employed are fabricated from an ethylene
      polymer and the thermoplastic resin particles
      employed are particles of an ethylene polymer.

5.    Apparatus for sealing sections of large diameter
      thermoplastic pipe from the interior thereof
      including in combination:

      (a)   A tubular member aligned with the axis of
            the pipe section in which the apparatus is
            to operate,

      (b)   A wheel mounted tranversely on said tubular
            member for rotation thereabout,

      (c)   A plate mounted on said rotatable wheel,

      (d)   A pair of flame spray guns mounted on said
            plate and positioned so that the flames
            therefrom lie in a common plane,

      (e)   Means for positioning the axially-aligned
            tubular member centrally within the pipe
            section in which the apparatus is to operate,
            and

(f) Means for feeding a gas/air mixture to one flame spray gun and a gas/air/particulate thermoplastic resin mixture to the second flame spray gun.

6. Apparatus of claim 5 supported on a main frame which rides on a plurality of wheels; said wheels being mounted on extensible and retractable legs which both support the main frame and position it so that the axially-aligned tubular member is centrally positioned within the pipe section.

7. Apparatus of claim 5 or 6 which includes a plurality of arcuate feet carried on extensible and retractable arms which can be extended to press against the interior wall of a pipe section to prevent movement of the apparatus.

8. Apparatus for sealing sections of large diameter thermoplastic pipe from the interior thereof including in combination:

(a) A main frame member,

(b) A plurality of wheels mounted on said main frame with extensible and retractable legs to support and position said main frame within the thermoplastic pipe,

(c) A main tubular support member mounted on the main frame aligned with the axis of the pipe in which the apparatus is to operate, and positioned so that it can be centrally positioned within the pipe by said support legs,

(d)   A ring mounted transversely on the main tubular
      support member,

(e)   A plurality of chambers carried on said ring,

(f)   Arms extensible from and retractable into said
      chamber,

(g)   Arcuate feet mounted on the ends of said arms to
      firmly contact the interior wall of the pipe,

(h)   A first rotatable sprocket wheel transversely mounted
      on said main tubular support member,

(i)   A carrier plate attached to said first sprocket
      wheel,

(j)   A pair of flame spray guns carried on said carrier
      plate and mounted to direct a flame against a defined
      annular section of the interior wall of pipe in which
      the apparatus is positioned,

(k)   Means for feeding a stream of a combustible gas/air
      mixture to the leading flame spray gun,

(l)   Means for feeding a stream of a combustible gas/air
      mixture and fine thermoplastic resin particles to
      the trailing flame spray gun,

(m)   A second rotatable sprocket wheel mounted on the
      main frame,

(n)   A drive chain running over said two sprocket wheels,
      and

(o)   Means for driving said second sprocket wheel.

*Fig.2*

*Fig.1*

*Fig.3*

*Fig.4*

*Fig.5*

*Fig.7*

*Fig.8*

Fig. 6

*Fig. 9*

*Fig. 12*

*Fig.* 10

*Fig.* 11

*Fig.13*

200
206
202
202
14
14

*Fig.14*

204
200
202

*Fig.15*

208
200
202
206
200

# 0081931

## EUROPEAN SEARCH REPORT

European Patent Office

Application number

EP 82 30 6242

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A-1 331 602 (W.PRESS & SON LIMITED) *The whole document* | 1-3,5, 6,8 | F 16 L 47/02 B 29 C 27/02 |
| Y | GB-A- 971 526 (IMPERIAL CHEMICAL INDUSTRIES LIM.) *Page 1, lines 9-34* | 1-3,5, 6,8 | |
| A | US-A-3 606 913 (GENE G. YIE) *Figures 1,2* | 1 | |
| A | DE-B-1 191 554 (REGINALD H.GARDENER) *Figures 1,11* | | |
| A | AT-A- 359 793 (W.F.A.WANG) *Figures 1-3* | | |

TECHNICAL FIELDS SEARCHED (Int. Cl. ³)

F 16 L
B 29 C

The present search report has been drawn up for all claims

| Place of search | Date of completion of the search | Examiner |
|---|---|---|
| THE HAGUE | 18-03-1983 | ANGIUS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82